Europäisches Patentamt

European Patent Office

Office européen des brevets

(19)

(11) Veröffentlichungsnummer: **0 045 940**
**B1**

(12) **EUROPÄISCHE PATENTSCHRIFT**

(45) Veröffentlichungstag der Patentschrift:
25.01.84

(51) Int. Cl.³: **F 16 L 59/16**

(21) Anmeldenummer: **81106131.6**

(22) Anmeldetag: **05.08.81**

(54) **Isolierkappe für Rohrleitungsarmaturen und Werkzeugsatz zum Herstellen derselben.**

| | |
|---|---|
| (30) Priorität: **12.08.80 CH 6088/80** | (73) Patentinhaber: **ADHESIVE AG, Industriestrasse 8, CH-8903 Birmensdorf (CH)** |
| (43) Veröffentlichungstag der Anmeldung: **17.02.82 Patentblatt 82/7** | (72) Erfinder: **Schibig, Arthur, Ottostrasse 19, CH-8005 Zürich (CH)** |
| (45) Bekanntmachung des Hinweises auf die Patenterteilung: **25.01.84 Patentblatt 84/4** | (74) Vertreter: **Troesch, Hans Alfred, Dr. Ing. et al, Walchestrasse 19, CH-8035 Zürich (CH)** |
| (84) Benannte Vertragsstaaten: **AT BE CH DE FR GB IT LI LU NL SE** | |
| (56) Entgegenhaltungen: **DE - U - 1 914 406** | |
| **DE - U - 1 973 739** | |
| **DE - U - 7 029 627** | |
| **US - A - 1 108 840** | |
| **US - A - 3 556 158** | |
| **US - A - 3 598 157** | |
| **US - A - 3 645 564** | |
| **US - A - 3 724 491** | |
| **US - A - 4 207 918** | |

ACTORUM AG

## Isolierkappe für Rohrleitungsarmaturen sowie
## Werkzeugsatz zum Herstellen derselben

Die vorliegende Erfindung betrifft eine Isolierkappe für Rohrleitungsarmaturen, bestehend aus zwei längs der Achse der isolierten Anschlussrohrleitungen geteilten Halbschalen, wobei der die Armatur umgebende Einhüllkörper zu den Anschlussrohrleitungen koaxiale, die Rohrleitungsisolierung aussen umfassende Stutzen bzw. Manschetten aufweist sowie einen Werkzeugsatz zum Herstellen von Isolierkappen für Rohrleitungsarmaturen mit einheitlicher Einhüllkörpergrösse und den isolierten Anschlussrohrleitungen angepassten Stutzen bzw. Manschetten, bestehend aus einem Kern und einer diesen umgebenden Hülle zur Formung des Einhüllkörpers.

Es ist bekannt, Armaturen zu isolieren, indem man Kappen aus Metall oder Kunststoff herstellt und diese mit Mineralfasern oder Baumwollzöpfen ausstopft oder sie mit 2-Komponenten-Ortsschaum ausschäumt. Diese sog. Armaturenkappen werden entsprechend der Armaturengrösse und der Rohranschlussgrösse auf der Baustelle einzeln angefertigt.

Diese Einzelanfertigungen ergeben derart hohe Preise, dass in den meisten Fällen die Rohrisolation nur bis zu den Armaturen ausgeführt wird, die Armaturen jedoch unisoliert bleiben.

Es ist ferner bekannt geworden (US-A-3 556 158), Armaturen dadurch zu isolieren, dass man zwei vorher ausgeschäumte, steife Halbschalen als Hülle beidseitig gegen das zu isolierende Ventil oder die Armatur presst, sodass sich die Form des zu isolierenden Körpers in dem Schaum abdrückt. Die Halbschalen sind so gross ausgebildet, dass sie für Armaturen verschiedener Grösse und Form verwendet werden können. Nach dem Anpressen werden die beiden Schalen mittels in Umfangsnuten eingelegten Bändern zusammengehalten. Die Schalen weisen keine Überlappungsränder oder die Isolierung der Anschlussrohrleitungen übergreifende Manschetten auf. Die Montage dieser Isolierkappe bedarf eines erheblichen maschinellen Aufwandes und eines guten handwerklichen Könnens.

Eine gattungsgemässe Isolierkappe für Rohrleitungsarmaturen ist aus der US-A-1 108 840 bekannt, welche aus zwei längs der Achse der isolierten Anschlussrohrleitungen geteilten Halbschalen besteht. Die beiden Halbschalen sind mit einer Steckverbindung aufeinanderpassend ausgebildet, wobei zungenförmige, an einer Schale vorgesehene Lappen in entsprechende Ausnehmungen in der Gegenschale eingesteckt und das überstehende Ende der Lappen als Sicherung umgebogen werden. Der die Armatur umgebende Einhüllkörper weist zu den Anschlussrohrleitungen koaxiale, die Rohrleitungsisolierungen aussen umfassende Stutzen bzw. Manschetten auf. Der Einhüllkörper dieser bekannten Isolierkappe ist nur für eine bestimmte Grösse von Armaturen vorgesehen. Zudem ist die Verbindung der Halbschalen derart fixiert, dass eine Anpassung an die Isolationsstärke nicht möglich ist. Daher können Differenzen in der Isolierstärke, bedingt durch Toleranzen oder Abweichungen der Rohrdurchmesser von wenigen mm nicht ausgeglichen werden. Diese Isolierungen sind zudem bezüglich Zusammenhalt ungenügend. Sie riskieren daher durch Leitungsschläge, wie sie, insbesondere in Dampfleitungen häufig vorkommen, auseinander zu fallen.

Die vorliegende Erfindung bezweckt demgegenüber die Schaffung einer Isolierkappe, welche erlaubt, Differenzen in der Isolierstärke auszugleichen und welche mit Mitteln versehen ist, um auf einfache Art und Weise die beiden Halbschalen auch gegen äussere Einflüsse und Schläge in den Leitungen zusammenzuhalten, und welche, bedingt durch ihre Abmessungen, gross genug, ist, um verschiedene Armaturengrössen und verschiedene Leitungsdurchmesser ohne Anpassungsarbeit mittels fabrikfertiger Modelle zu isolieren.

Diese Aufgabe wird gelöst durch eine Isolierkappe für Rohrleitungsarmaturen, welche sich dadurch auszeichnet, dass die beiden Halbschalen an ihrer Trennfuge mit sich gegenseitig überlappenden Rändern versehen sind, dass die Stutzen bzw. Manschetten jeweils eine äussere Umfangsnut zum Einlegen eines Spanndrahtes aufweisen, und dass der die Armatur umgebende Einhüllkörper so gross ausgebildet ist, dass er Armaturen verschiedener Grösse aufnehmen kann.

Zum Herstellen von Isolierkappen für Rohrleitungsarmaturen dient ein Werkzeugsatz, welcher sich dadurch auszeichnet, dass auswechselbare, in den Kern und die Hülle eingesetzte, die Stutzen bzw. Manschetten formende Werkzeugteile vorgesehen sind.

Die Erfindung wird anschliessend beispielsweise anhand einer Figur sowie einer Tabelle erläutert.

Es zeigen:

Fig. 1 einen unmittelbar an der Meridianebene gelegenen Schnitt durch ein in der Meridianebene geteiltes Werkzeug zum Herstellen eines Armaturenbausatzes im Spritzgussverfahren, wobei die Armatur NW 30 an zwei Rohrleitungen unterschiedlicher NW angeschlossen werden soll,

Fig. 2 eine perspektivische Darstellung einer mit den Werkzeugen nach Fig. 1 erzeugten Armaturenkappe.

Im Sinne der Erfindung wurde gefunden, dass für Armaturen NW 15 mm, NW 20 mm, NW 25 mm, NW 30 mm, NW 40 mm und NW 50 mm dieselbe Armaturenkappe verwendet werden kann, wenn bei den Rohranschlüssen eine Manschette gebildet wird, die dem Durchmesser der für die unterschiedlichen NW im Durchmesser unterschiedlichen Rohrisolationen entspricht.

Aus der Tabelle «Armaturenkappen zur Armaturen NW 20 bis NW 50» ist ersichtlich, dass beispielsweise für Armaturenkappen zu Armaturen NW 20 mm das Herstellwerkzeug, sei es für das Kunststoffspritzgussverfahren oder für das Herstellen aus Plattenmaterial im Vakuumtiefziehverfahren, einen Grunddurchmesser entsprechend einem Manschettendurchmesser von 69 vorgesehen ist. Es ist dann mit weiteren neun Einsätzen eine Anpassung des Manschettendurchmessers an die Werte 75, 80, 85, 90, 95, 103, 108, 112 bis 119 mm möglich. Somit können Manschetten für Rohre von 3/4" bis 76 mm bei einer Isolierstärke von 20 mm mit ein und demselben Werkzeug mit immer der gleichen Armaturenkappe und entsprechenden Einsätzen den Rohrdurchmessern angepasst werden. Im gleichen Sinne ist ein weiteres Werkzeug für eine grössere Armaturenkappe, z.B. NW 50, vorgesehen, wobei total zehn Einsätze dazu dienen, diesen Manschettendurchmesser in den angegebenen Stufen von 124 bis auf 187 mm zu erhöhen. Damit sind Rohre von 1/2" bis 83 mm mit einer Isolierstärke von 20–50 mm durch diese Grösse der Armaturenkappe anschliessbar.

In der gleichen Weise kann dieselbe Armaturenkappe für Armaturen von NW 65 mm bis NW 80 mm oder NW 100 mm bis 150 mm verwendet werden. Diese Armaturenkappen zeichnen sich dadurch aus, dass im Spritzgusswerkzeug oder Tiefziehwerkzeug der die Manschetten bildende Werkzeugteil durch auswechselbare Einsätze dem entsprechenden Durchmesser der Rohrisolation angepasst werden kann. Auf diese Weise können erhebliche Werkzeugkosten eingespart werden. Dadurch, dass bei diesen Armaturenkappen die Manschetten auf den Aussendurchmesser der Rohrisolation ausgerichtet sind, wird die Anzahl der verschiedenen Rohranschlussmöglichkeiten bei ebenfalls verschiedenen Einsätzen 65 verschiedene Rohrisolationen auf diese Manschetten passen, wie dies die Tabelle zeigt.

Armaturenkappen zu Armaturen NW 20 bis NW 50 mm

| Einsatz resp. Manschetten-durchmesser mm | Passend zu Rohrdurchmesser und × Isolierstärke | | | | |
|---|---|---|---|---|---|
| | NW 20 mm | NW 25 mm | NW 30 mm | NW 40 mm | NW 50 mm |
| 69 | 3/4–27 ×20 | | | | |
| 75 | 1–33 ×20 | 1/2–21 ×25 | | | |
| 80 | 38 ×20 | 3/4–27 ×25 | | | |
| 85 | 1 1/4–42–44 ×20 | 1–33 ×25 | 1/2–21 ×30 | | |
| 90 | 1 1/2–48 ×20 | 38 ×25 | 3/4–27 ×30 | | |
| 95 | 51–54 ×20 | 1 1/4–42–44 ×25 | 1–33 ×30 | | |
| 103 | 2–57–60 ×20 | 1 1/2–48–51 ×25 | 1 1/4–38–42 ×30 | 1/2–21 ×40 | |
| 108 | 64 ×20 | 54–57 ×25 | 44 ×30 | 3/4–27 ×40 | |
| 112 | 70 ×20 | 2–60 ×25 | 1 1/2–48–51 ×30 | | |
| 119 | 2 1/2–76 ×20 | 64 ×25 | 54–57 ×30 | 1–33–38 ×40 | |
| 124 | | 70 ×25 | 2–60–64 ×30 | 1 1/4–42–44 ×40 | 1/2–21 ×50 |
| 131 | | 2 1/2–76 ×25 | 70 ×30 | 1 1/2–48–51 ×40 | 3/4–27 ×50 |
| 139 | | 83 ×25 | 2 1/2–76 ×30 | 54–57 ×40 | 1–33 ×50 |
| 144 | | 3–89 ×25 | 83 ×30 | 2–60–64 ×40 | 1 1/4–38–42 ×50 |
| 152 | | 95 ×25 | 3–89 ×30 | 70 ×40 | 1 1/2–48–51 ×50 |
| 158 | | 3 1/2–102 ×25 | 95 ×30 | 2 1/2–76 ×40 | 54–57 ×50 |
| 164 | | 108 ×25 | 3 1/2–102 ×30 | 83 ×40 | 2–60–64 ×50 |
| 172 | | 4–115 ×25 | 108 ×30 | 3–89 ×40 | 70 ×50 |
| 180 | | | 4–115 ×30 | 95 ×40 | 2 1/2–76 ×50 |
| 187 etc. | | | 121–127 ×30 | 3 1/2–102 ×40 | 83 ×50 |

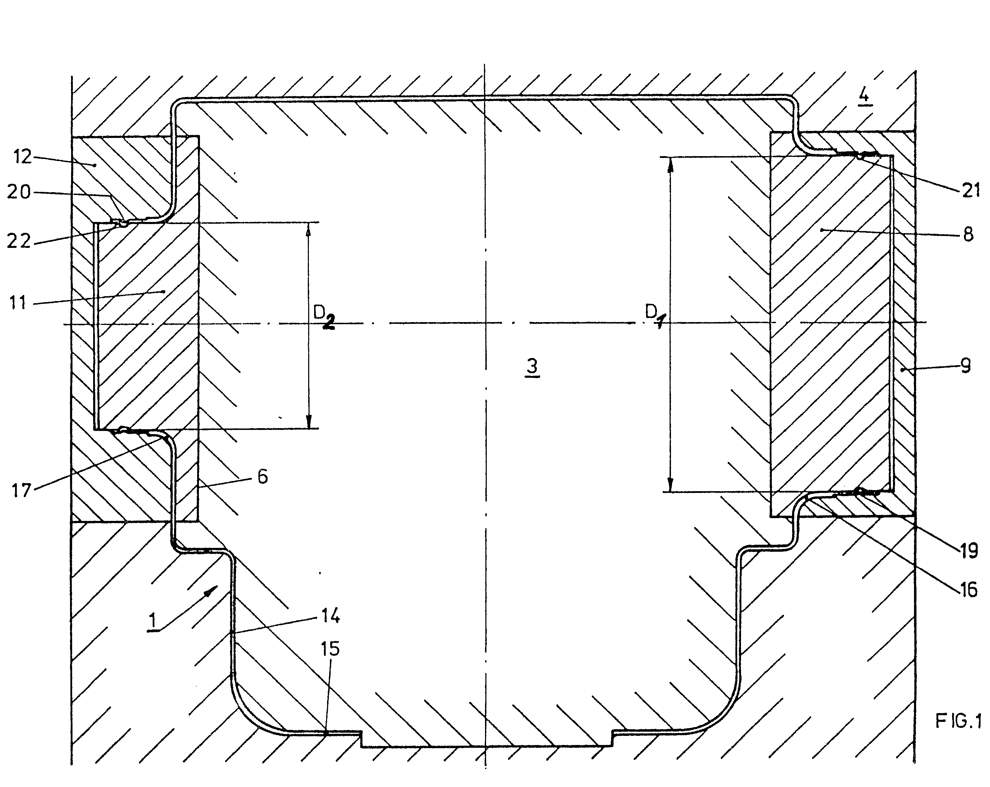

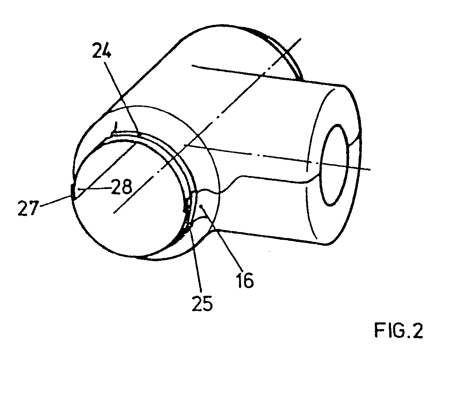

Werkzeuge zur Herstellung derartiger Armaturenkappen-Baureihen sind in ihrer Meridianebene geteilt. Um das Werkzeug mit zwei verschiedenen Einsätzen, entsprechend zwei verschiedenen Rohrdurchmessern, einer Armatur zeichnerisch besser zum Ausdruck zu bringen, ist die eine Werkzeughälfte unmittelbar an der Trennebene (Meridianebene) geschnitten, so dass die Teile als geschnitten dargestellt werden können. In diesem Sinne ist in Fig. 1 eine Werkzeughälfte 1 zur Herstellung von Armaturenkappen-Baureihen dargestellt, mit einem mittigen Kern 3 und einer Hülle 4. Der Kern 3 und die Hülle 4 gehören zu den Grundformteilen der Werkzeughälfte 1. Im Kern 3 ist für den Manschettenansatz eine Manschettenausnehmung 6 vorgesehen, in welche ein dem anzuschliessenden Rohrdurchmesser entsprechender Inneneinsatz 8 eingelegt werden kann. Dazu passt ein Ausseneinsatz 9. Die Einsätze 8 und 9 ergeben grossdurchmesserige ($D_1$) Manschetten, wogegen die auf der Gegenseite (Fig. 1) dargestellten Einsätze 11 und 12, ein Innen- und ein Ausseneinsatz, für kleinere Manschettendurchmesser ($D_2$) vorgesehen sind. Zwischen diesen einzelnen Teilen 3, 4, 8, 9, 11 und 12 ist ein Spalt 14 für die Aufnahme einer Kunststoffmasse vorgesehen. Der Spalt 15 legt die Armaturenkappe fest, während die Spalte 16 und 17 die entsprechenden Manschetten begrenzen. Wie ersichtlich, sind Innen- und Ausseneinsätze 8, 9, 11 und 12 je mit einem Wulst 19 bzw. 20 und einer Nut 21 bzw. 22 versehen, welche, wie in Fig. 2 ersichtlich, eine entsprechende Nut 24 auf der Manschettenaussenseite freigeben, in der ein Draht 25 eingelegt werden kann. Da die beiden Hälften der Manschetten nicht durch Flansche, sondern durch Überlappungsränder 27 und 28 ineinander geschoben werden, kann durch entsprechendes Spannen des Drahtes 25 der Durchmesser der Manschetten 16 bzw. 17 in gewissen Grenzen verändert werden. Dies ermöglicht es, kleine Differenzen in der Isolierstärke, bedingt durch Toleranzen oder Abweichungen der Rohrdurchmesser von wenigen mm auszugleichen. Da Isoliermaterial infolge der vielen Lufträume keiner grossen Druckbelastung standhält, kann durch Zusammenziehen des Bindedrahtes 25 die Nut bzw. der innere Wulst zur Nut 24 soweit in das Isoliermaterial eingepresst werden, bis der richtige Durchmesser der Manschette 16 bzw. 17 eingestellt und zugleich die Armaturenkappe an der Rohrisolation befestigt ist.

Das beschriebene Werkzeug nach Fig. 1 ist ein Spritzgusswerkzeug, bei welchem das Kunststoffmaterial in flüssigem Zustand in die Spalte gepresst wird. Wird der Bausatz durch Vakuum-Tiefziehen hergestellt, so entfallen die die Spalte nach aussen begrenzenden Werkzeugteile 4, 9 und 12.

## Patentansprüche

1. Isolierkappe für Rohrleitungsarmaturen, bestehend aus zwei längs der Achse der isolierten Anschlussrohrleitungen geteilten Halbschalen, wobei der die Armatur umgebende Einhüllkörper zu den Anschlussrohrleitungen koaxiale, die Rohrleitungsisolierung aussen umfassende Stutzen bzw. Manschetten (16, 17) aufweist, dadurch gekennzeichnet, dass die beiden Halbschalen an ihrer Trennfuge mit sich gegenseitig überlappenden Rändern (27, 28) versehen sind, dass die Stutzen bzw. Manschetten (16, 17) jeweils eine äussere Umfangsnut (24) zum Einlegen eines Spanndrahtes (25) aufweisen, und dass der die Armatur umgebende Einhüllkörper so gross ausgebildet ist, dass er Armaturen verschiedener Grösse aufnehmen kann.

2. Werkzeugsatz (1) zum Herstellen von Isolierkappen für Rohrleitungsarmaturen mit einheitlicher Einhüllkörpergrösse und den isolierten Anschlussrohrleitungen angepassten Stutzen bzw. Manschetten (16, 17) nach Anspruch 1, im Spritzgiessverfahren, bestehend aus einem Kern (3) und einer diesen umgebenden Hülle (4) zur Formung des Einhüllkörpers, dadurch gekennzeichnet, dass auswechselbare, in den Kern (3) und die Hülle (4) eingesetzte, die Stutzen bzw. Manschetten (16, 17) formende Werkzeugteile (8, 9; 11, 12) vorgesehen sind.

3. Werkzeugsatz (1) zum Herstellen von Isolierkappen für Rohrleitungsarmaturen mit einheitlicher Einhüllkörpergrösse und den isolierten Anschlussrohrleitungen angepassten Stutzen bzw. Manschetten (16, 17) nach Anspruch 1 im Vakuumtiefziehverfahren, bestehend aus einem Kern (3) zur Formung des Einhüllkörpers, dadurch gekennzeichnet, dass auswechselbare, in den Kern (3) eingesetzte, die Stutzen bzw. Manschetten (16, 17) formende Werkzeugteile (8) vorgesehen sind.

## Revendications

1. Cache isolant pour accessoires de tuyauterie, qui se compose de deux demi-coquilles divisées le long de l'axe des tuyauteries de raccordement isolées, et dans lequel le corps d'enveloppe entourant l'accessoire présente des douilles ou des manchons (16, 17) enveloppant extérieurement l'isolation des tuyauteries, coaxialement au tuyauteries de raccordement, caractérisé en ce que les deux demi-coquilles sont pourvues, dans leur zone de séparation, de bords (27, 28) se recouvrant mutuellement, en ce que les douilles ou les manchons (16, 17) présentent chacun une rainure circonférentielle extérieure (24) pour recevoir un fil métallique de serrage (25) et en ce que le corps d'enveloppe entourant l'accessoire est conçu suffisamment grand pour pouvoir recevoir des accessoires de différentes dimensions.

2. Jeu d'outils (1) pour confectionner des caches isolants pour accessoires de tuyauterie avec des dimensions de corps d'enveloppe unitaires et des douilles ou des manchons (16, 17) adaptés aux tuyauteries de raccordement isolées selon la revendication 1, par un procédé de moulage par injection, jeu d'outils qui comprend un noyau (3) et une enveloppe (4) entourant celui-ci pour le façonnage du corps d'enveloppe, caractérisé en ce que des éléments d'outils interchangeables (8, 9; 11, 12) pour le façonnage des douilles ou des manchons (16, 17) sont prévus pour être insérés dans le noyau (3) et l'enveloppe (4).

3. Jeu d'outils (1) pour confectionner des caches isolants pour accessoires de tuyauterie avec des dimensions de corps d'enveloppe unitaires et des douilles ou des manchons (16, 17) adaptés aux tuyauteries de raccordement isolées selon la revendication 1, par un procédé d'emboutissage sous vide, jeu d'outils qui comprend un noyau (3) pour le façonnage du corps d'enveloppe, caractérisé en ce que des éléments d'outils (8) interchangeables, pour le façonnage des douilles ou des manchons (16, 17) sont prévus pour être insérés dans le noyau (3).

## Claims

1. Insulating cap for pipe-line armatures, consisting of two half shells divided along an axis of the insulated connecting pipe-lines, in which the encasing member surrounding the armature has sockets or sleeves (16, 17) coaxial to the connecting pipe-lines and surrounding the pipe-lines insulation externally, characterized in that the two half shells are provided on their plane of separation with reciprocally overlapping edges (27, 28), in that the sockets or sleeves (16, 17) in each case have an outer circumferential groove (24) for the insertion of a bracing wire (25), and in that the encasing member surrounding the armature is constructed so large as to be able to receive armatures of varying size.

2. Set of tools (1) for the production of insulating caps for pipe-line armatures with uniform size of encasing member and sockets or sleeves (16,17) adapted for the insulated connecting pipe-lines, in accordance with Claim 1 by the injection moulding process, consisting of a core (3) and a casing (4) surrounding the latter for the forming of the encasing member, characterized in that interchangeable tool parts (8, 9; 11, 12) are provided, which are inserted into the core (3) and the casing (4) and which form the sockets or sleeves (16, 17).

3. Set of tools (1) for the production of insulating caps for pipe-line armatures with uniform size of encasing member and sockets or sleeves (16,17) adapted for the insulated connecting pipe-lines, in accordance with Claim 1 by the vacuum deep-drawing process, consisting of a core (3) for the forming of the encasing member, characterized in that interchangeable tool parts (8) are provided, which are inserted into the core (3) and which form the sockets or sleeves (16, 17).

FIG.1

FIG.2